# EUROPEAN PATENT SPECIFICATION

(11) **EP 0 651 008 B1**
(45) Date of publication and mention of the grant of the patent: **23.06.1999**
(21) Application number: 94116921.1
(22) Date of filing: 26.10.1994
(51) Int. Cl.: C08K 9/10, C08L 83/04

(54) **Heat-curing organopolysiloxane composition**
Wärme-härtbare Organopolysiloxanzusammensetzung
Composition d'organopolysiloxane durcissable à chaud

(30) Priority: 27.10.1993 JP 29141593
(43) Date of publication of application: 03.05.1995
(73) Proprietor: Dow Corning Toray Silicone Company, Limited, Tokyo 103 (JP)
(72) Inventor: Saruyama, Toshio, Dow Corning Toray, Ichihara-shi, Chiba Prefecture (JP); Togashi, Atsushi, Dow Corning Toray, Ichihara-shi, Chiba Prefecture (JP)
(74) Representative: Spott, Gottfried, Dr.

(56) References cited:
- EP-A- 0 449 181
- EP-A- 0 483 775

## Description

The invention relates to a heat-curing organopolysiloxane composition that cures through the hydrosilylation reaction which is highly storage-stable and also exhibits an excellent high-temperature compatibility.

There have been numerous attempts at improving the storage stability and curing characteristics of hydrosilylation-curing organopolysiloxane compositions. One approach suggested improvements to the hydrosilylation catalyst. For example, JP-A 58-37053 (37,053/1983) teaches a heat-curing organopolysiloxane composition whose catalyst is a platinum catalyst-containing thermoplastic silicone resin micropowder. A drawback is that its curing characteristics change during long-term storage, and its cure start-time (hereinafter defined as the time required for the torque to reach 10% of its final value) declines during long-term storage. JP-A 64-45468 (45,468/1989) and JP-A 3-68659 (68,659/1991) propose heat-curing organopolysiloxane compositions in the form of a platinum catalyst microcapsulated by thermoplastic organic resin. Acrylic resins are ideal viewed from the criterion that the organic resin should release the hydrosilylation catalyst in the temperature range which is appropriate for inducing the cure of heat-curing organopolysiloxane compositions 80°C to 150°C. Unfortunately, these compositions undergo discoloration when exposed to high temperatures during or after curing.

Our invention introduces a heat-curing organopolysiloxane composition whose curing characteristics do not change during storage and whose appearance is not impaired even upon exposure to high temperatures.

The invention provides to a heat-curing organopolysiloxane composition comprising:
(A) 100 weight parts organopolysiloxane that contains at least 2 silicon-bonded alkenyl groups in each molecule,
(B) organohydrogenpolysiloxane that contains at least 2 silicon-bonded hydrogen atoms in each molecule, in a quantity that gives values in the range of 0.5/1 to 10/1 for the ratio of the number of moles of silicon-bonded hydrogen in the present component to the number of moles of silicon-bonded alkenyl in component (A), and
(C) 0.005 to 100 weight parts microparticulate hydrosilylation catalyst that is composed of a platinum hydrosilylation catalyst and a thermoplastic resin composition, wherein said thermoplastic resin composition consists of 30 to 90 weight% thermoplastic silicone resin and 70 to 10 weight% thermoplastic acrylic resin, with the provisos that the glass-transition point of the thermoplastic resin composition is 40°C to 200°C and the microparticulate hydrosilylation catalyst has an average particle diameter of 0.1 to 20 micrometers.

Component (A) is the base component of the present invention and contains at least 2 silicon-bonded alkenyl groups in each molecule. The alkenyl group is exemplified by vinyl, allyl, and hexenyl. The non-alkenyl silicon-bonded organic groups in this organopolysiloxane comprise monovalent hydrocarbon groups of alkyl groups such as methyl, ethyl, propyl, butyl, hexyl, and octyl; aryl groups such as phenyl; and substituted hydrocarbon groups such as 3,3,3-trifluoropropyl. It is desirable that on average 1.0 to 2.3 organic groups are bonded to silicon. The organopolysiloxane will ordinarily be straight chain, but may be branched to some degree. In general, its degree of polymerization preferably yields a viscosity (25°C) of 10 to 1,000,000 mPa.s (centipoise).

The organohydrogenpolysiloxane, component (B), functions as a crosslinker for organopolysiloxane (A), and contains at least 2 silicon-bonded hydrogen atoms in each molecule. The non-hydrogen silicon-bonded organic groups in this organohydrogenpolysiloxane comprise monovalent hydrocarbon groups of alkyl groups such as methyl, ethyl, propyl, butyl, hexyl, and octyl; aryl groups such as phenyl; and substituted hydrocarbon groups such as 3,3,3-trifluoropropyl. The molecular structure of this organohydrogenpolysiloxane may be straight chain, network, or three-dimensional. This component can be used in the form of the homopolymer, copolymer, or mixture of two or more polymers. The degree of polymerization of the subject organohydrogenpolysiloxane should give a viscosity (25°C) generally in the range of 0.5 to 50,000 mPa.s (centipoise) and preferably in the range of 1 to 10,000 mPa.s (centipoise). This component is added in a quantity that gives values in the range of 0.5/1 to 10/1 for the ratio of the number of moles of silicon-bonded hydrogen atoms in component (B) to the number of moles of silicon-bonded alkenyl groups in component (A).

Component (C) is a microparticulate hydrosilylation catalyst that is composed of a thermoplastic resin composition and a platinum hydrosilylation catalyst. This component is a catalyst for the hydrosilylation-based crosslinking between the silicon-bonded alkenyl groups in component (A) and the hydrogen-bonded silicon atom in component (B).

The thermoplastic resin composition used must contain 30 to 90 weight% thermoplastic silicone resin and 70 to 10 weight% thermoplastic acrylic resin. The cured composition exhibits diminished properties at less than 30 weight% thermoplastic silicone resin, while the storage stability of the composition tends to decline at more than 90 weight% thermoplastic silicone resin. The instant thermoplastic resin composition must also have a glass-transition point in the range of 40°C to 200°C. The storage stability of our composition falls off drastically when the glass-transition point is below 40°C, while the curing characteristics of this composition are sharply impaired at glass-transition points in excess of 200°C.

Any thermoplastic silicone resin that contains at least 1 siloxane unit, selected from SiO₂, RSiO_{3/2}, R₂SiO, and R₃SiO_{1/2}, may be used as our thermoplastic resin composition. The group R denotes a monovalent organic group, for example, alkyl such as methyl, alkenyl such as vinyl, aryl such as phenyl, and 3,3,3-trifluoropropyl. The silicone resin is exemplified by silicone resins with the following formulas:

(C₆H₅SiO_{3/2})_{0.9}((CH₃)₂SiO)_{0.1},

(C₆H₅SiO_{3/2})_{0.78}((CH₃)₂SiO)_{0.22},

(C₆H₅SiO_{3/2})_{0.65}((C₆H₅)₂SiO)_{0.17}((CH₃)₂SiO)_{0.18},

(C₆H₅SiO_{3/2})_{0.78}((CH₂=CH)(CH₃)SiO)_{0.22},

(C₆H₅SiO_{3/2})_{0.78}((CH₂=CH) (CH₃)SiO)_{0.06}((CH₃)₂SiO)_{0.16},

and

(CF₃CH₂CH₂SiO_{3/2})_{0.8}((CH₃)₂SiO)_{0.1}(SiO₂)_{0.1}.

The acrylic resin that is the other component in our thermoplastic resin composition is exemplified by polymethyl methacrylate, methyl methacrylate/butyl methacrylate copolymers, and the like. Copolymers containing other monomers can be used as long as the glass-transition point remains in the range of 40°C to 200°C.

The platinum hydrosilylation catalyst may be any platinum catalyst active in the hydrosilylation reaction, and is exemplified by chloroplatinic acid, alcohol-modified chloroplatinic acid, platinum/olefin complexes, platinum/diketone complexes, chloroplatinic acid/vinylsiloxane complexes, and platinum supported on alumina, silica, or carbon black. Among these, the platinum/vinylsiloxane complexes are preferred for their high catalytic activity. These catalysts may be used directly, or they may be are obtained by dissolving these catalysts in solvent. Platinum/vinylsiloxane complexes are preferably used in the form of polysiloxane solutions that are liquid at room temperature. The instant component preferably contains the platinum hydrosilylation catalyst at the amount of 0.05 to 2.00 weight% as platinum atoms. At less than 0.05 weight%, this component must be added in such large amounts that the properties of our composition are lost or impaired. On the other hand, at more than 2.00 weight% it becomes highly problematic to hold the platinum hydrosilylation catalyst in this component.

Component (C) must have an average particle diameter of 0.1 to 20 micrometers. Stable long-term storage of our invention at ambient temperature becomes very problematic at less than 0.1 micrometer, while curing becomes nonuniform at values in excess of 20 micrometers.

The microparticulate hydrosilylation catalyst comprising component (C) can be prepared by known methods. For example, it can be prepared by the method of JP-A 58-37053 (37,053/1983). In this document, the platinum hydrosilylation catalyst and the thermoplastic resin composition are first dissolved in solvent. The solvent is then evaporated off to give the solidified catalyst-containing thermoplastic resin composition, which is ground to give the desired product. The preparative method taught in JP-A 2-4833 (4,833/1990) is also applicable. Therein, the platinum hydrosilylation catalyst and thermoplastic resin composition are first dissolved in a low-boiling solvent, and this solution is then added dropwise to an aqueous surfactant solution to give an O/W emulsion. A solid micropowder is subsequently produced by gradually eliminating the low-boiling solvent from the emulsion, and recovery of the solid micropowder from the aqueous solution yields the desired product. Another applicable method is disclosed in JP-A 4-29748 (29,748/1992). This method also begins with dissolution of the thermoplastic resin composition and platinum hydrosilylation catalyst in solvent. However, this solution is then sprayed into a hot gas current, where the solvent is evaporated and catalyst-containing thermoplastic resin composition is solidified - while in the sprayed state - into a microparticulate form. Among the preceding, the method of JP-A 4-29748 is optimal in terms of productivity, low impurity levels, and production of microparticles of uniform size.

Component (C) is added at 0.005 to 100 weight parts per 100 weight parts organopolysiloxane (A). In addition, component (C) is preferably added in a quantity that gives 0.1 to 100 ppm as platinum atoms.

The composition of the present invention consists of components (A), (B), and (C) as described above, but the addition of a hydrosilylation-inhibiting compound (component (D)) is preferred. At the point of heat-curing, component (D) functions to accelerate curing and to bring about a complete cure. This component comprises those compounds heretofore known to retard the cure and improve the storage stability of hydrosilylation-curing organopolysiloxane compositions. Such compounds are exemplified by phosphorus-containing compounds such as triphenylphosphine; nitrogenous compounds such as tributylamine, tetramethylethylenediamine, and benzotriazole; sulfur-containing compounds; acetylenic compounds; compounds that contain 2 or more alkenyl groups; hydroperoxy compounds; and maleic acid derivatives. Among the preceding, alkenyl-containing compounds and alkynyl-containing compounds are preferred, and the following are particularly preferred: compounds that contain two or more alkynyl groups in each molecule, compounds that contain both alkenyl and alkynyl in the molecule, compounds that contain alkenyl and alcoholic hydroxyl in the molecule, maleic acid diesters, and organosilicon compounds that contain a bonding unit in which alkenyl is bonded to each of two adjacent silicon atoms that are bonded to each other through oxygen. Component (D) should be added at 0.00001 to 5 weight parts per 100 weight parts component (A).

The following may be added to the invention composition on an optional basis insofar as the object of the present invention is not impaired: microparticulate silicas such as fumed silica and wet-process silica, surface-hydrophobicized microparticulate silicas, crepe-hardening inhibitors, non-silicone polymers, organic solvents, heat stabilizers such as iron oxide and rare-earth compounds, flame retardants such as manganese carbonate and fumed titanium oxide, and also diatomaceous earth, calcium carbonate, glass fiber, and carbon black.

The composition of this invention is prepared simply by mixing the aforementioned components (A), (B), and (C) to homogeneity. Mixing is preferably carried out by first adding component (C) to a small quantity of component (A) and dispersing component (C) therein to homogeneity and then adding this dispersion to a mixture of components (A) and (B). The temperature conditions during mixing preferably do not exceed the glass-transition point of the thermoplastic resin composition in component (C) by more than 50°C.

The heat-curing organopolysiloxane composition of our invention exhibits an excellent storage stability in the vicinity of room temperature and as a result can be subjected to long-term storage. At the same time, this composition undergoes a complete and rapid cure when heated. These attributes make it very useful as a single-package heat-curing organopolysiloxane composition.

The invention is explained in greater detail below through working examples, in which the viscosity is the value at 25°C, % indicates weight%, Ph indicates phenyl, Me indicates methyl, Vi indicates vinyl, and cP is an abbreviation for centipoise.

Example 1. (Reference) A solution was prepared by dissolving 6 g aqueous chloroplatinic acid solution (platinum content = 33%) and 16 g 1,3-divinyltetramethyldisiloxane in 35 g isopropyl alcohol. 10 g sodium bicarbonate was added to this solution, which was then reacted in suspension form for 30 minutes at 70°C to 80°C while stirring. After reaction and cooling, the solids were removed by filtration to give an isopropanolic solution of a platinum/vinylsiloxane complex composition that contained 4.2% platinum. The following were then introduced into a stirred glass container and mixed to homogeneity: 603 g thermoplastic silicone resin (glass-transition point = 69°C) with the average unit formula

(PhSiO_{3/2})_{0.78}(Me₂SiO)_{0.22},

297 g methyl methacrylate/butyl methacrylate copolymer (glass-transition point = 80°C, Elvacite TM2013 from Du Pont), 500 g toluene, and 4,600 g dichloromethane. The addition to this mixture of 86 g of the platinum/vinylsiloxane complex composition prepared as above with mixing to homogeneity gave a solution of the platinum/vinylsiloxane complex composition and a thermoplastic resin composition. Using a two fluid nozzle and a hot nitrogen flow, this solution was continuously sprayed into a spray-drying chamber (Ashizawa-Niro Atomizer Ltd.). During this process, the temperature of the hot nitrogen flow at the inlet to the spray dryer was 80°C and at the outlet from the spray dryer was 45°C. The hot gas flow rate was 1.3 m³/minute. After operation for 1 hour, 360 g microparticulate hydrosilylation catalyst had been collected by bag filter. The average particle diameter of this microparticulate catalyst was 1.36 micrometers and its platinum content was 0.40%. Almost perfect spheres were observed when the morphology of this microparticulate catalyst was inspected by scanning electron microscopy (SEM).

Example 2. (Reference) A solution of platinum/vinylsiloxane complex composition plus thermoplastic silicone resin was prepared using the procedure of Example 1, but in this case omitting the methyl methacrylate/butyl methacrylate copolymer used in Reference Example 1 and using 900 g of the thermoplastic silicone resin. This solution was then sprayed into a spray-dryer chamber as in Example 1. After operation for 1 hour, 380 g microparticulate hydrosilylation catalyst had been collected by bag filter. The average particle diameter of this microparticulate catalyst was 1.51 micrometers and its platinum content was 0.40%. Spheres were observed when the morphology of this microparticulate catalyst was inspected by SEM.

Example 3. (Reference) A solution of platinum/vinylsiloxane complex composition plus thermoplastic acrylic resin was prepared using the procedure of Example 1, but in this case omitting the thermoplastic silicone resin that was used in Example 1 and using 900 g of the methyl methacrylate/butyl methacrylate copolymer. When this solution was sprayed as in Example 1 into the spray dryer, a clinging fibrous solid was produced in large quantities in the nozzle region. This clogged the nozzle after approximately 20 minutes and prevented further operation. Due to this, spray-drying testing was conducted by preparing dilutions of this solution by the addition of a toluene plus dichloromethane mixture (weight ratio of the mixture = 5 : 46). It was determined that a microparticulate hydrosilylation catalyst could be obtained when the concentration of the thermoplastic acrylic resin in the solution was 5%. The 5% solution of the thermoplastic acrylic resin was therefore spray-dried, and 90 g microparticulate hydrosilylation catalyst was collected over 1 hour of operation. The average particle diameter of this microparticulate catalyst was 2.2 micrometers and its platinum content was 0.40%. When the morphology of this microparticulate catalyst was inspected by SEM, the microparticles were found to be spherical and a moderate amount of a fibrous solid was determined to be present.

Example 4. 12 g fumed silica hydrophobicized with hexamethyldisilazane was thoroughly mixed into a mixture of 25 g alpha,omega-divinylpolydimethylsiloxane with a viscosity of 1,500 mPa.s (cP) and 50 g alpha,omega-divinylpolydimethylsiloxane with a viscosity of 10,000 mPa.s (cP). This was followed by the addition to the resulting mixture of 1.2 g of a methylhydrogensiloxane with the average molecular formula

Me₃SiO(Me₂SiO)₃(MeHSiO)₅SiMe₃

and 0.03 g phenylbutynol with mixing to homogeneity. A heat-curing organopolysiloxane composition was obtained by the addition with thorough mixing of 0.125 g of the microparticulate hydrosilylation catalyst prepared in Example 1. The following curing characteristics were measured on this composition at 150°C using a Curastometer TM Model 5 from *Orientec Kabushiki Kaisha: the cure start* time (T₁₀ = time required for the torque to reach 10% of its final value) and the cure completion time (T₉₀ = time required for the torque to reach 90% of its final value). After measurement, the composition used in the measurement was held for 4 hours at 200°C and its appearance was then inspected. The curing characteristics were also measured by the same procedure on compositions that had been aged for 30 days at 50°C. In addition, the viscosity of the composition was measured every several days while the composition was aged at 50°C in order to determine the number of days required for the viscosity to double. This number of days is reported as the stable storage period. The various results are reported in Table 1.

Example 5 comparative. A heat-curing organopolysiloxane composition was prepared using the procedure of Example 4, but in this case replacing the microparticulate hydrosilylation catalyst prepared in Example 1 and used in Example 4 with the microparticulate hydrosilylation catalyst prepared in Example 2. The composition was submitted to evaluation of its curing characteristics (immediately after preparation and after aging), appearance, and stable storage period as in Example 4, and these results are also reported in Table 1.

Example 6 comparative. A heat-curing organopolysiloxane composition was prepared using the procedure of Example 4, but in this case replacing the microparticulate hydrosilylation catalyst prepared in Example 1 and used in Example 4 with the microparticulate hydrosilylation catalyst prepared in Example 3. The composition was submitted for evaluation of its curing characteristics (immediately after preparation and after aging), appearance, and stable storage period as in Example 4. These results are also reported in Table 1.

**Table 1**

| curing characteristics (seconds) | Example 4 | Example 5 comparative | Example 6 comparative |
|---|---|---|---|
| immediately after preparation | | | |
| T₁₀ | 25.2 | 36.0 | 43.8 |
| T₉₀ | 33.6 | 46.8 | 60.6 |

| after aging | | | |
|---|---|---|---|
| T₁₀ | 24.0 | 28.2 | 45.0 |
| T₉₀ | 34.2 | 42.6 | 70.8 |
| appearance | yellowing | yellowing | yellowing |
| storage stable period (days) | 52 | 38 | 95 |

Example 7. (Reference) A solution was prepared by dissolving 6 g aqueous chloroplatinic acid solution (platinum content = 33%) and 16 g 1,3-divinyltetramethyldisiloxane in 35 g isopropyl alcohol. 10 g sodium bicarbonate was added to this solution, which was then reacted in suspension form for 30 minutes at 70°C to 80°C while stirring. After the reaction and cooling, the solids were removed by filtration to give an isopropanolic solution of a platinum/vinylsiloxane complex composition that contained 4.2% platinum. The following were then introduced into a stirred glass container and mixed to homogeneity: 603 g thermoplastic silicone resin (glass-transition point = 62°C) with the average unit formula

(PhSiO_{3/2})_{0.78}(MeViSiO)_{0.06}(Me₂SiO)_{0.16},

297 g methyl methacrylate/butyl methacrylate copolymer (glass-transition point = 80°C, Elvacite TM2013 from Du Pont), 500 g toluene, and 4,600 g dichloromethane. The addition to this mixture of 86 g of the platinum/vinylsiloxane complex composition prepared as above with mixing to homogeneity gave a solution of the platinum/vinylsiloxane complex composition and a thermoplastic resin composition. Using a two fluid nozzle and a hot nitrogen flow, this solution was continuously sprayed into a spray-drying chamber (Ashizawa-Niro Atomizer Ltd.). During this process, the temperature of the hot nitrogen flow at the inlet to the spray dryer was 80°C and at the outlet from the spray dryer was 45°C. The hot gas flow rate was 1.3 m³/minute. After operation for 1 hour, microparticulate hydrosilylation catalyst had been collected by bag filter. The average particle diameter of this microparticulate catalyst was 1.3 micrometers and its platinum content was 0.40%. Almost perfect spheres were observed when the morphology of this microparticulate catalyst was inspected by SEM.

Example 8. (Reference) A solution of platinum/vinylsiloxane complex composition plus thermoplastic silicone resin was prepared using the procedure of Example 7, but in this case omitting the methyl methacrylate/butyl methacrylate copolymer used in Example 7 and using 900 g of the thermoplastic silicone resin. This solution was then sprayed into a spray-dryer chamber as in Example 4. After operation for 1 hour, microparticulate hydrosilylation catalyst had been collected by bag filter. The average particle diameter of this microparticulate catalyst was 1.5 micrometers and its platinum content was 0.40%. Spheres were observed when the morphology of this microparticulate catalyst was inspected by SEM.

Example 9. 12 g fumed silica hydrophobicized with hexamethyldisilazane was thoroughly mixed into a mixture of 25 g alpha,omega-divinylpolydimethylsiloxane with a viscosity of 1,500 mPa.s (cP) and 50 g alpha,omega-divinylpolydimethylsiloxane with a viscosity of 10,000 mPa.s (cP). This was followed by the addition to the resulting mixture of 1.2 g of a methylhydrogensiloxane with the average molecular formula

Me₃SiO(Me₂SiO)₃(MeHSiO)₅SiMe₃

and 0.03 g phenylbutynol with mixing to homogeneity. A heat-curing organopolysiloxane composition was obtained by the addition with thorough mixing of 0.125 g of the microparticulate hydrosilylation catalyst prepared in Example 7. The following curing characteristics were measured on this composition at 150°C using a Curastometer TM Model 5 from Orientec Kabushiki Kaisha: the cure start time (T₁₀ = time required for the torque to reach 10% of its final value) and the cure completion time (T₉₀ = time required for the torque to reach 90% of its final value). After measurement, the composition used in the measurement was held for 4 hours at 200°C and its appearance was then inspected. The curing characteristics were also measured by the same procedure on composition that had been aged for 27 days at 50°C. In addition, the viscosity of the composition was measured every several days while the composition was aged at 50°C in order to determine the number of days required for the viscosity to double. This number of days is reported as the stable storage period. The various results are reported in Table 2.

Example 10 comparative. A heat-curing organopolysiloxane composition was prepared using the procedure of Example 9, but in this case replacing the microparticulate hydrosilylation catalyst prepared in Example 7 and used in Example 9 with the microparticulate hydrosilylation catalyst prepared in Example 8. The composition was submitted for evaluation of its curing characteristics (immediately after preparation and after aging), appearance, and stable storage period as in Example 9. These results are also reported in Table 2.

**Table 2**

| curing characteristics (seconds) | Example 9 | Example 10 comparative |
|---|---|---|
| immediately after preparation | | |
| T₁₀ | 23.4 | 22.2 |
| T₉₀ | 30.6 | 29.4 |

| after aging | | |
|---|---|---|
| T₁₀ | 21.6 | 15.6 |
| T₉₀ | 33.6 | 30.0 |
| appearance | no yellowing | no yellowing |
| storage stable period (days) | 52 | 32 |

## Claims

1. A heat-curing organopolysiloxane composition comprising:
(A) 100 weight parts organopolysiloxane that contains at least 2 silicon-bonded alkenyl groups in each molecule,
(B) organohydrogenpolysiloxane that contains at least 2 silicon-bonded hydrogen atoms in each molecule, in a quantity that gives values in the range of 0.5/1 to 10/1 for the ratio of the number of moles of silicon-bonded hydrogen in the present component to the number of moles of silicon-bonded alkenyl in component (A), and
(C) 0.005 to 100 weight parts microparticulate hydrosilylation catalyst that is composed of a platinum hydrosilylation catalyst and a thermoplastic resin composition wherein said thermoplastic resin composition consists of 30 to 90 weight% thermoplastic silicone resin and 70 to 10 weight% thermoplastic acrylic resin, with the provisos that the glass-transition point of the thermoplastic resin composition is 40°C to 200°C and the microparticulate hydrosilylation catalyst has an average particle diameter of 0.1 to 20 micrometers.

2. A heat-curing organopolysiloxane composition according to Claim 1, in which the content of the platinum hydrosilylation catalyst in component (C) is 0.05 to 2.00 weight% as platinum atoms.

3. A heat-curing organopolysiloxane composition according to Claim 1, further comprising: (D) 0.00001 to 5 weight parts hydrosilylation-inhibiting compound.

4. A heat-curing organopolysiloxane composition according to Claim 1, in which component (C) is produced by dissolving the thermoplastic resin composition and the platinum hydrosilylation catalyst in solvent to prepare a solution, which is then sprayed into a hot gas current in order to evaporate the solvent and solidify the thermoplastic resin composition while in the sprayed state to give a micropowder.

5. A heat-curing organopolysiloxane composition according to Claim 1, where Component A has a viscosity at 25°C within a range of about 10 to 1,000,000 mPa.s (centipoise).

6. A heat-curing organopolysiloxane composition according to Claim 1, where component B has a viscosity at 25°C within a range of about one to 10,000 mPa.s (centipoise).

7. A heat-curing organopolysiloxane composition according to Claim 1, where the platinum hydrosilylation catalyst is a platinum and vinylsiloxane complex.

## Patentansprüche

1. Wärmehärtbare Organopolysiloxanzusammensetzung, die die folgenden Bestandteile umfaßt:
(A) 100 Gew.-Teile Organopolysiloxan, das mindestens zwei siliciumgebundene Alkenylgruppen in jedem Molekül enthält,
(B) Organohydrogenpolysiloxan, das mindestens zwei siliciumgebundene Wasserstoffatome in jedem Molekül enthält, in einer Menge, die Werte in einem Bereich von 0,5/1 bis 10/1 für das Verhältnis Zahl der Mole an siliciumgebundenem Wasserstoff in der vorliegenden Komponente/Zahl der Mole der siliciumgebundenen Alkenylgruppen in Komponente (A) liefert, und
(C) 0,005 bis 100 Gew.-Teile mikroteilchenförmigen Hydrosilylierungskatalysators, der aus einem Platinhydrosilylierungskatalysator und einer thermoplastischen Harzzusammensetzung besteht, wobei die thermoplastische Harzzusammensetzung aus 30-90 Gew.-% thermoplastischem Siliconharz und 70-10 Gew.-% thermoplastischem Acrylharz besteht, wobei gilt, daß die Einfriertemperatur der thermoplastischen Harzzusammensetzung 40-200°C beträgt und der mikroteilchenförmige Hydrosilylierungskatalysator einen mittleren Teilchendurchmesser von 0,1 bis 20 µm aufweist.

2. Wärmehärtbare Organopolysiloxanzusammensetzung nach Anspruch 1, in der der Gehalt des Platinhydrosilylierungskatalysators in der Komponente (C) 0,05 bis 2,00 Gew.-% ausgedrückt als Platinatome beträgt.

3. Wärmehärtbare Organopolysiloxanzusammensetzung nach Anspruch 1, die des weiteren die folgenden Bestandteile umfaßt:
(D) 0,00001 bis 5 Gew.-Teile einer eine Hydrosilylierung hemmenden Verbindung.

4. Wärmehärtbare Organopolysiloxanzusammensetzung nach Anspruch 1, in der die Komponente (C) durch Auflösen der thermoplastischen Harzzusammensetzung und des Platinhydrosilylierungskatalysators in Lösungsmittel zur Herstellung einer Lösung, welche anschließend in einen heißen Gasstrom eingesprüht wird, um das Lösungsmittel zu verdampfen und die thermoplastische Harzzusammensetzung zu verfestigen, während sie sich im Sprühzustand befindet, um ein Mikropulver herzustellen, hergestellt worden ist.

5. Wärmehärtbare Organopolysiloxanzusammensetzung nach Anspruch 1, wobei die Komponente A eine Viskosität bei 25°C im Bereich von etwa 10 bis 1.000.000 mPa·s (Centipoise) aufweist.

6. Wärmehärtbare Organopolysiloxanzusammensetzung nach Anspruch 1, wobei die Komponente B eine Viskosität bei 25°C im Bereich von etwa 1 bis 10.000 mPa·s (Centipoise) aufweist.

7. Wärmehärtbare Organopolysiloxanzusammensetzung nach Anspruch 1, wobei der Platinhydrosilylierungskatalysator ein Platin/Vinylsiloxan-Komplex ist.

## Revendications

1. Une composition d'organopolysiloxane thermodurcissable comprenant :
(A) 100 parties en poids d'organopolysiloxane qui contient au moins 2 groupes alcényles liés au silicium dans chaque molécule,
(B) un organohydrogénopolysiloxane qui contient au moins 2 atomes d'hydrogène liés au silicium dans chaque molécule, en une quantité qui donne des valeurs comprises dans l'intervalle de 0,5/1 à 10/1 pour le rapport du nombre de moles d'hydrogène lié au silicium dans le présent composant au nombre de moles de groupes alcényles liés au silicium dans le composant (A), et
(C) 0,005 à 100 parties en poids d'un catalyseur d'hydrosilylation microparticulaire qui est constitué d'un catalyseur d'hydrosilylation au platine et d'une composition de résine thermoplastique, ladite composition de résine thermoplastique consistant en 30 à 90 % en poids de résine de silicone thermoplastique et 70 à 10 % en poids de résine acrylique thermoplastique, avec les conditions que le point de transition vitreuse de la composition de résine thermoplastique soit de 40°C à 200°C et que le catalyseur d'hydrosilylation microparticulaire ait un diamètre moyen de particules de 0,1 à 20 micromètres.

2. Une composition d'organopolysiloxane thermodurcissable selon la revendication 1, dont la teneur en catalyseur d'hydrosilylation au platine du composant (C) est de 0,05 à 2,00 % en poids, exprimée en atomes de platine.

3. Une composition d'organopolysiloxane thermodurcissable selon la revendication 1, comprenant de plus :
(D) 0,00001 à 5 parties en poids d'un composé inhibiteur d'hydrosilylation.

4. Une composition d'organopolysiloxane thermodurcissable selon la revendication 1, dans laquelle le composant (C) est produit en dissolvant la composition de résine thermoplastique et le catalyseur d'hydrosilylation au platine dans un solvant pour préparer une solution qui est ensuite atomisée dans un courant de gaz chaud afin d'évaporer le solvant et solidifier la composition de résine thermoplastique pendant qu'elle est à l'état atomisé pour former une micropoudre.

5. Une composition d'organopolysiloxane thermodurcissable selon la revendication 1, dans laquelle le Composant A présente une viscosité à 25°C comprise dans un intervalle d'environ 10 à 1 000 000 mPa.s (centipoises).

6. Une composition d'organopolysiloxane thermodurcissable selon la revendication 1, dans laquelle le composant B présente une viscosité à 25°C comprise dans un intervalle d'environ 1 à 10 000 mPa.s (centipoises).

7. Une composition d'organopolysiloxane thermodurcissable selon la revendication 1, dans laquelle le catalyseur d'hydrosilylation au platine est un complexe de platine et de vinylsiloxane.
